# FASCICULE DE BREVET EUROPEEN

(11) **EP 1 601 255 B1**
(45) Date de publication et mention de la délivrance du brevet: **06.08.2008**
(21) Numéro de dépôt: 03816343.2
(22) Date de dépôt: 08.12.2003
(51) Int. Cl.: A23G 9/16, A23G 9/28

(54) **DISPOSITIF REDUCTEUR DE PERTES LORS DE LA PRODUCTION DE CREME GLACEE**
VORRICHTUNG ZUR VERRINGERUNG VON VERLUSTEN WÄHREND DER HERSTELLUNG VON SPEISEEIS
DEVICE FOR REDUCING LOSSES DURING THE PRODUCTION OF ICE CREAM

(30) Priorité: 04.03.2003 FR 0302608
(43) Date de publication de la demande: 07.12.2005
(73) Titulaire: Heine, Philippe, 91710 Vert le Petit (FR)
(72) Inventeur: Heine, Philippe, 91710 Vert le Petit (FR)
(74) Mandataire: Martin, Didier Roland Valéry
(86) Numéro de dépôt international: PCT/FR2003/003620
(87) Numéro de publication internationale: WO 2004/082394

(56) Documents cités:
- US-A- 3 839 881
- US-A- 4 484 597
- US-A- 5 361 941
- US-B1- 6 299 025

## Description

La présente invention concerne un dispositif destiné à réduire les pertes lors d'un démarrage d'une ligne de production de crème glacée équipée d'un freezer traditionnel..

Dans l'état actuel de la technique, cette opération se fait de la manière suivante: la ligne étant composée d'un freezer (machine destinée à refroidir un mélange réalisé préalablement après y avoir incorporé plus ou moins d'air suivant les recettes à une température appelée température de dosage), d'une tubulure entre ce freezer et la machine de dosage et donc d'une machine de dosage qui précède elle-même généralement un tunnel de durcissement et des machines de conditionnement,
on démarre le freezer afin de travailler (glacer) les premières quantités du mélange réalisé préalablement puis on les achemine par l'intermédiare de la tubulure vers la machine de dosage.

Les premières quantités étant impropres au dosage pour des raisons de texture trop molle et trop liquide, elles constituent une perte que l'on tente de recycler ultérieurement sur d'autres installations dans des conditions pas toujours satisfaisantes et souvent partielles.

Le but de la présente invention est d'apporter un moyen de réduire ces pertes de démarrage.

L'analyse des phénomènes mis en jeu lors de cette opération de démarrage montre que l'origine principale des pertes est la quantité de produit qu'il faut utiliser pour refroidir la tubulure située entre le freezer et la machine de dosage jusqu'à ce que le métal constituant cette tubulure soit suffisamment froid pour que les conditions d'adhérence entre produit et paroi de la tubulure soient telles que le dosage soit possible.

En effet, au sortir du freezer, le produit est à une température comprise entre -8°C à -9°C et 0°C suivant l'utilisation que l'on veut en faire. La température de la tubulure est au début des opérations la température ambiante (18°C et plus). Le boudin fond donc légèrement au contact du métal et s'écoule trop vite en perdant de la consistance et en interdisant le dosage jusqu'à ce que, après le passage d'une certaine quantité de produit, la tubulure soit suffisamment froide pour qu'il se crée une adhérence entre boudin de produit et métal. Le produit devient alors dosable mais des pertes importantes ont eu lieu.

Le dispositif selon la présente invention permet de descendre avant le début du doage la température de la tubulure à la tempréature souhaitée (sans le faire par l'intermédiaire du produit) en évitant ainsi les pertes.

Le dispositif selon l'invention comporte selon une première caractérisitique trois éléments.:
- le premier élément appelé "fluide frigo porteur" est un fluide à température voisine de la température de dosage requise.
- le second élément appelé "entourage" est un dispositif permettant d'entourer la tubulure tout en permettant la circulation du "fluide frigo proteur" en son sein.
- le troisième élément appelé "pompe" est une pompe permettant de faire circuler le fluide au sein de l' "entourage".

Selon une autre caractérisitique de l'invention, le dispositif sera équipé d'un élément de commande appelé "commande" permettant de faire circuler le "fluide frigo proteur" au sein de l' "entourage" pendant un temps désiré avant le début du dosage proprement dit.

Selon un mode de réalisation particulier, le "fluide frigo porteur" pourra être de l'eau glycolée que l'on trouve souvent à une températurede -5°C à -6°C dans les usines de production de crème glacée, en distribution centralisée.

Selon un autre mode de réalisation particulier, 1' "entourage" pourra être une serpentin fait de tuyau creux entourant la tubulure spire contre spire de manière à constituer à cette tubulure une sorte de seconde enveloppe. Le rendement du système serait vraisemblablement fortement amélioré si la section du tuyau creux était paralépipédique (et non pas ronde) de manière à créer un contact surfacique (et non mas linéaire) avec la tubulure. La matière de l' "entourage" devra permettre le transfert des frigories du "fluide frigo porteur" vers la tubulure.

Selon un autre mode de réalisation particulier, la "pompe" pourra être choisie dans la gamme classique des produits du commerce et la "commande" réalisée selon des règles d'automatisme classique.

L'avantage principal offert par le dispositif selon l'invention est la réduction des pertes liées au démarrage d'une installation industrielle classique de fabrication de crème glacée.

## Revendications

1. Dispositif pour réduire les pertes liées au démarrage d'une ligne de fabrication industrielle de crème glacée, ladite ligne comprenant un freezer, une machine de dosage ainsi qu'une tubulure qui conduit la crème glacée du freezer à la machine de dosage, ledit dispositif étant **caractérisé en ce qu'**il comporte un fluide frigo-porteur dont la température est voisine de la future température de dosage de la crème glacée, ledit dispositif étant **caractérisé** également **en ce qu'**il comporte un entourage permettant d'entourer ladite tubulure tout en permettant la circulation du fluide frigo-porteur en son sein, ledit dispositif étant **caractérisé** également **en ce qu'**il est équipé d'une pompe actionnée par une commande permettant de faire circuler le fluide dans l'entourage.

2. Dispositif selon la revendication 1 **caractérisé en ce que** l'entourage est un serpentin fait de tuyau creux entourant la tubulure spire contre spire de manière à constituer à cette tubulure une sorte de seconde enveloppe.

3. Dispositif selon la revendication 2 **caractérisé en ce que** la section du tuyau creux est parallélépipédique de manière à créer un contact surfacique avec la tubulure.

4. Dispositif selon l'une des revendications 1 à 3 **caractérisé en ce que** la matière constitutive de l'entourage permet le transfert des frigories du fluide frigo-porteur vers la tubulure.

## Claims

1. Device for reducing losses relating to the starting up of an industrial ice-cream manufacturing line, the said line comprising a freezer, an apportioning machine and a manifold that conducts the ice cream from the freezer to the apportioning machine, the said device being **characterised in that** it comprises refrigerant fluid, the temperature of which is close to the future apportioning temperature of the ice-cream, the said device also being **characterised in that** it comprises a surround for surrounding the said manifold while allowing the circulation of the refrigerant fluid within it, the said device also being **characterised in that** it is equipped with a pump actuated by a command for causing the fluid to circulate in the surround.

2. Device according to claim 1, **characterised in that** the surround is a coil made from hollow pipe surrounding the manifold turn against turn so as to constitute for this manifold a kind of second envelope.

3. Device according to claim 2, **characterised in that** the cross section of the hollow pipe is parallelepipedal so as to create a surface contact with the manifold.

4. Device according to one of claims 1 to 3, **characterised in that** the material constituting the surround allows the transfer of negative calories from the refrigerant fluid to the manifold.

## Patentansprüche

1. Vorrichtung zur Verringerung von Verlusten, die mit dem Anfahren einer industriellen Fertigungsstraße für Speiseeis verbunden sind, wobei die Straße ein Gefriergerät umfasst, eine Dosiermaschine sowie einen Stutzen, der das Speiseeis vom Gefriergerät zur Dosiermaschine leitet, wobei die Vorrichtung **dadurch gekennzeichnet ist, dass** sie ein Kälteträger-Fluid aufweist, dessen Temperatur nahe der künftigen Dosiertemperatur des Speiseeises liegt, wobei die Vorrichtung auch **dadurch gekennzeichnet ist, dass** sie eine Umgebung aufweist, die es ermöglicht, den Stutzen zu umschließen und gleichzeitig den Fluss des Kälteträger-Fluids in seinem Inneren ermöglicht, wobei die Vorrichtung auch **dadurch gekennzeichnet ist, dass** sie mit einer Pumpe ausgestattet ist, die durch eine Steuerung betätigt wird, welche es ermöglicht, das Fluid in der Umgebung zirkulieren zu lassen.

2. Vorrichtung nach Anspruch 1, **dadurch gekennzeichnet, dass** die Umgebung eine Spirale aus einem hohlen Rohr ist, die den Stutzen Windung gegen Windung umgibt, so dass sie für diesen Stutzen eine Art zweiter Umhüllung darstellt.

3. Vorrichtung nach Anspruch 2, **dadurch gekennzeichnet, dass** der Schnitt des hohlen Rohres parallelepipedisch ist, so dass er einen Oberflächenkontakt mit dem Stutzen bildet.

4. Vorrichtung nach einem der Ansprüche 1 bis 3, **dadurch gekennzeichnet, dass** die Stoffbeschaffenheit der Umgebung ermöglicht, die Frigorien des Kälteträger-Fluids auf den Stutzen zu übertragen.
